# EUROPEAN PATENT APPLICATION

(11) **EP 1 070 690 A2**
(43) Date of publication of application: **24.01.2001**
(21) Application number: 00500106.0
(22) Date of filing: 29.05.2000
(51) Int. Cl.: C05C 13/00, C05C 1/00, C05C 5/00, C05C 9/00, C05G 1/00

(54) **Nitrogenated fertilizer containing ureic, nitric, ammoniac and organic nitrogen, of gradual solubility and progressive nitrification, and preparation method**

(30) Priority: 20.07.1999 ES 9901639
(71) Applicant: INABONOS, S.A., E-31002 Pamplona (ES)
(72) Inventor: Garcia-Mina Freire, Jose Maria, 31170 Iza, Navarra (ES)
(74) Representative: Del Santo Abril, Natividad

(57) **Abstract**

The gradual solubility and progressive nitrification are obtained due to the physical-chemical association of the nitrogenated fertilizer to a silicate and/or an inorganic sulfate. This allows the sustained release of the diverse nitrogen forms, which is due to an adsorption-absorption of the silicates and to an insoluble organic membrane of calcium sulfate.

The preparation method consists in the mixture in a reactor-mixer of urea, ammonium sulfate and a silicate to which later on is added a nitrate anion (NO₃⁻) source. The mixture is kept under an efficient aspiration system and finally an organic nitrogen source is added.

## Description

This invention relates to a nitrogenated fertilizer that contains ureic, nitric, ammoniac and organic nitrogen, which is slowly released in the soil and is resistant to lixiviation.

Numerous studies have experimentally shown the huge losses (between 40 and 60% of the applied nitrogen according to the climatology and nature of the soil) that seem to be related to the use of nitrogenated fertilizers due to the ammoniac nitrogen volatilization and lixiviation of the soil nitrates (Fertilizer Technology and Use. Engelstad, O.P., SSSA publ. Wisconsin, USA, 1985). Besides the economical cost, these losses are also related to the contamination of aquifers and of the vegetables produced which (depending on the country) are getting more important. This situation has brought the need for a control and adjustment of the nitrogen units added to the cultures. In some countries exist strict laws that significantly reduce the amount of nitrogen units that a farmer is allowed to use per cultivation and year ("EC policy regarding pollution of agricultural origin: the Nitrate Directive". Campbell, P. In Fertilizers and Environment Rodríguez-Barrueco, C. Ed. Kluwer Academic Publ., Dordrecht. 1995).

In order to control and minimize these losses directly associated with the processes of nitrification, denitrification and hydrolysis of the urea in the soil, there have been developed diverse products that slow down the release of nitrogen to the environment. These fertilizers are generally known as sustained release fertilizers and consist of:

Low solubility products ("fertilizantes de liberación lenta". Jiménez-Gómez, S. Mundi-Prensa., 1992)

Products covered with low soluble and partially porous materials of diverse nature ("fertilizantes de liberación lenta". Jiménez-Gómez, S. Mundi-Prensa., 1992)

Products in which an inhibitor of the hydrolysis of urea or an inhibitor of the nitrification is added to the nitrogenated fertilizer ("fertilizantes de liberación lenta". Jiménez-Gómez, S. Mundi-Prensa., 1992)

Till present, clay has never been used directly to control the gradual release of nitrogen in the nitrogenated fertilizers. Thus:

USA patent 4,328,024 describes a nitrogenated compound in which the source of nitrogen is exclusively organic nitrogen. The mechanism of gradual release of the fertilizer in this patent consists solely in the slow mineralization of organic nitrogen. Clay (atapulgite) is only added to reduce the humidity before pelletization.

GB patent 1,011,463 describes the use of inorganic materials (clay among others) to absorb the water excess. These materials are alternatives and secondary within other possible compounds.

And GB patent 1,027,079 describes the use of clay as anticompacting agent and not as sustained release agent that in this document is based fundamentally on the covering with polymers and waxes.

In the nitrogenated fertilizer from the present invention, the mechanism of gradual release of the fertilizer is based on the physical-chemical association (adsorption-absorption) of diverse nitrogen forms in diverse silicates used and in the insoluble inorganic membrane formed by calcium sulfate. Contrary to the aforementioned patents, the inorganic silicates play a role in the mechanism of sustained release of the elements of the fertilizer. Therefore, those inorganic silicates are primary and fundamental components.

On the other hand, recent results show that optimum nitrogenated fertilization consists in the ability to simultaneously provide nitric and ammoniac nitrogen to the plant (Chen et al, 1998 / J. Plant. Nutr., 21:87-97).

A good strategy to tackle the aforementioned points would be the development of a nitrogenated fertilizer that contains four diverse forms of nitrogen: nitric nitrogen, ammoniac nitrogen, ureic nitrogen and organic nitrogen, and in which could be controlled the solubilisation in water of the diverse compounds together with urea nitrification and hydrolysis. Technically, the stable chemical association in the same product of one nitric form with one ureic or organic form produces a lot of problems.

This is the object of the present invention: A solid fertilizer that can have four diverse forms of nitrogen: ureic, nitric, ammoniac and organic nitrogen, of gradual solubilisation and progressive nitrification together with the preparation process.

The nitrogenated fertilizer object of the invention contains the nitric, ammoniac, ureic and organic forms of nitrogen and is associated physical-chemically with a silicate and/or an inorganic sulfate. In the physical-chemical association exists chemical absorption and physical adsorption phenomena with the inorganic silicates of high adsorption-absorption that is enhanced by the formation of a low soluble membrane of diverse inorganic sulfates, mainly calcium.

The advantages of the nitrogenated fertilizer object of the invention are:
- Gradual and controlled solubilisation in water of the diverse nitrogenated forms.
- The gradual solubilisation of ammonium allows a control of the nitrification process.
- The gradual solubilisation of urea allows a controlled hydrolysis in the soil and the inhibition of volatilization processes.
- The gradual solubilisation of nitric nitrogen allows to reduce the losses by lixiviation and the contamination derived from that process.

A detailed description of the invention with the assistance of figures will be given in order to complete the presented depiction and for a better comprehension of the characteristics of the invention. The figures included in this descriptive report and to which belong show the following:

Figure 1 shows the percentage of solubilised nitrogen with respect to the total amount as a function of washing steps.

Figure 2 shows the collected percentage of solubilised nitrogen with respect to the total amount as a function of washing steps.

The fertilizer is obtained by reaction of three main components:
- A source for nitrate anion (NO₃⁻), like nitric acid or the possible diverse inorganic nitrates.
- Urea.
- Any kind of natural or synthetic silicate: clay (zeolite, sepiolite, atapulgite..), talc kaolin, etc...

The optimal proportion of the above mentioned compounds is as follows:

35% of the first, 35% of the second, 25% of the third and the rest until 100% moisture.

This reaction can also be done adding diverse inorganic sulfates like ammonium sulfate or calcium sulfate with diverse degrees of hydration and they may substitute or not the silicate source.

This reaction can also be done adding a source of organic nitrogen like diverse flours from vegetal or animal origin, compost from animal or vegetal residues, humic substances from diverse origins, etc.

The optimal proportion of the organic nitrogen source in the final product is 15%.

This reaction can also be done adding any inhibitor of the hydrolysis of urea and of the nitrification processes.

### Example 1

A variant of the nitrogenated fertilizer object of the invention was prepared using the following components:
580 g of 60% nitric acid.
350 g of urea.
100 g of ammonium sulfate.
250 g of ground sepiolite (80% < 100 microns).
150 g of ground soy flour.

The preparation is as follows:

In a Lodige type reactor-mixer (a spade or a spiral mixer can also be used) mix the nitric acid, the urea and the ground sepiolite according to the above quantities. It is convenient to add first the ground sepiolite and the urea followed by the ammonium sulfate and finally the nitric acid. This procedure is carried out at atmospheric pressure. The reaction is exothermic and thence the temperature will rise (it can reach 70°C) producing some evaporation. Therefore, the reactor must be provided with an appropriate aspiration system.

Keep the reaction for an optimal period of 20 minutes counted after the addition of the last component.

Then, add the ground soy flour of particle size for 90% between 0,1 and 0,5 mm.

Keep the mixture for 20 minutes.

Later on, the final product can be pelletized, compacted or granulated with the appropriate equipment.

Then, the effect of the composition and the preparation method of the fertilizer object of the invention on the nitrogen dynamics can be studied.

The dynamics of nitrogen solubilisation in water was studied for the following compounds: urea, ammonium nitrate, ammonium sulfate, SNG (competitor's sustained release product) and the product object of the patent (P-patent).

This study has been carried out by washing a certain amount of sample (between 5 and 10 g depending on the purity of the product) with 80 mL of water at 20°C and determining by titration the fraction of nitrogen solubilised in each step.

The composition of the product object of the patent (P-patent) corresponds to the preparation method example previously described.

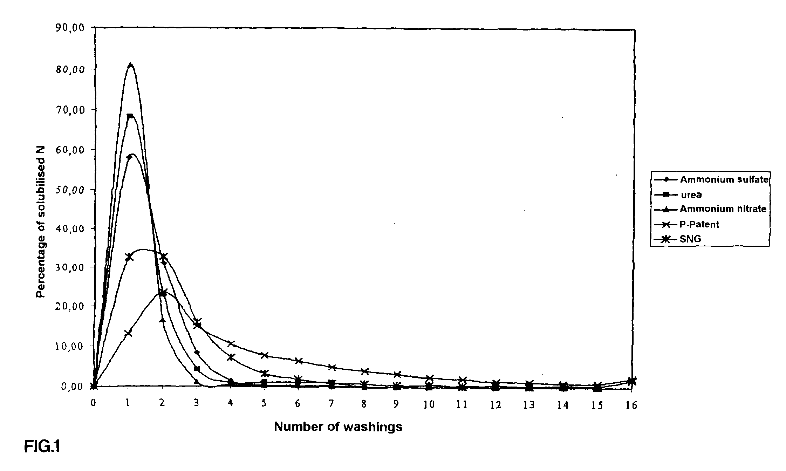

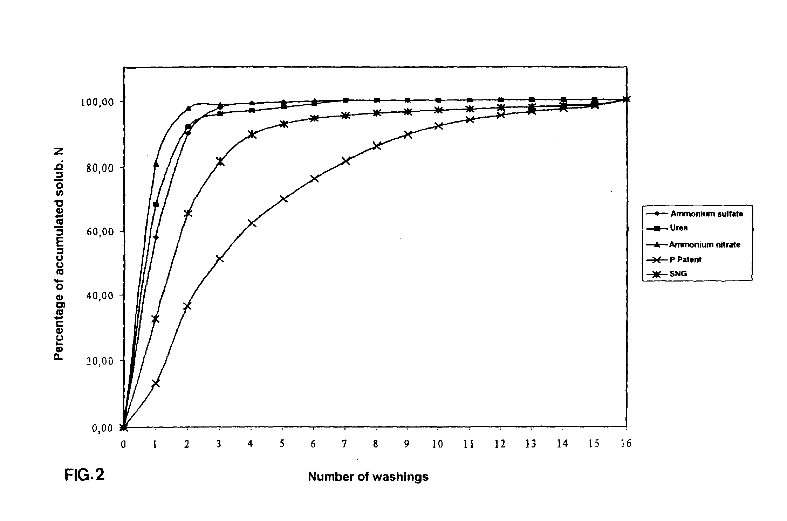

Figures 1 and 2 show the results for the percentage of solubilised nitrogen in each step (fig. 1) and the collected solubilised nitrogen (fig. 2).

The first washing step produces the solubilisation of 80%, 70% and 60% of ammonium sulfate, ammonium nitrate and urea respectively, whilst the solubilisation of P-patent is of 10%.

The second washing step produces the solubilisation of 90 to 100% of the nitrogen contained in urea, ammonium nitrate and ammonium sulfate whilst for compound P-patent the solubilisation is of 36%.

It is worth noting that P-patent allows a continuous release of N during the complete washing cycle, whilst the other products release the total amount of N between the second and third washing step. See figure 2.

The nitrogenated fertilizer object of the invention is provided as a liquid (suspension or solution) or solid form (granulated powder, pellets or compacted).

The nitrogenated fertilizer object of the invention can be used as fertilizer in any kind of culture - intensive (vegetables, fruits, citrics, etc.) or extensive (wheat, corn, alfalfa, etc.)- and under every climatological, edafic or irrigation condition (dripping, cloak irrigation, etc.).

The nitrogenated fertilizer object of the invention can be used at any dose because it is innocuous. However, the optimal dose is between 100 and 500 kg/ha depending on the culture and its conditions and whether the administration is local, general or with fertirrigation.

The nitrogenated fertilizer object of the invention can be used at any moment of the culture cycle. However, the optimal moment is during the so called background application or during seedtime.

## Claims

1. Nitrogenated fertilizer containing ureic, nitric, ammoniac and organic nitrogen, of gradual solubility and progressive nitrification characterized by a physical-chemical association of the components to a silicate and/or an inorganic sulfate.

2. Nitrogenated fertilizer containing ureic, nitric, ammoniac and organic nitrogen, of gradual solubility and progressive nitrification according to claim 1 that can be mixed or reacted with any organic or inorganic raw material that contains fertilizing elements such as phosphorous, potassium, calcium, magnesium, sulfur, carbon and micronutrients such as Fe, Zn, Cu, Mn, Co, Na, B, Mo, Ti and Si.

3. Nitrogenated fertilizer containing ureic, nitric, ammoniac and organic nitrogen, of gradual solubility and progressive nitrification according to claim 1 to which can be added any agent capable of inhibiting the hydrolysis of urea and/or nitrification such as dicyandimide, ammonium thiosulfate, thiourea and nomethylpyrazole.

4. Nitrogenated fertilizer containing ureic, nitric, ammoniac and organic nitrogen, of gradual solubility and progressive nitrification according to claim 1 in which the cited source of organic nitrogen is vegetal flours.

5. Nitrogenated fertilizer containing ureic, nitric, ammoniac and organic nitrogen, of gradual solubility and progressive nitrification according to claim 1 in which the cited source of organic nitrogen is animal flours.

6. Nitrogenated fertilizer containing ureic, nitric, ammoniac and organic nitrogen, of gradual solubility and progressive nitrification according to claim 1 in which the cited inorganic sulfate is ammonium sulfate.

7. Nitrogenated fertilizer containing ureic, nitric, ammoniac and organic nitrogen, of gradual solubility and progressive nitrification according to claim 1 in which the cited inorganic sulfate is calcium sulfate.

8. Nitrogenated fertilizer containing ureic, nitric, ammoniac and organic nitrogen, of gradual solubility and progressive nitrification according to claim 1 in which the cited silicate is sepiolite.

9. Nitrogenated fertilizer containing ureic, nitric, ammoniac and organic nitrogen, of gradual solubility and progressive nitrification according to claim 1 in which the cited silicate is atapulgite.

10. Nitrogenated fertilizer containing ureic, nitric, ammoniac and organic nitrogen, of gradual solubility and progressive nitrification according to claim 1 in which the cited silicate is zeolite.

11. Nitrogenated fertilizer containing ureic, nitric, ammoniac and organic nitrogen, of gradual solubility and progressive nitrification according to claim 1 in which the cited silicate is talc.

12. Nitrogenated fertilizer containing ureic, nitric, ammoniac and organic nitrogen, of gradual solubility and progressive nitrification according to claim 1 in which the cited silicate is kaolin.

13. Preparation method for a nitrogenated fertilizer containing ureic, nitric, ammoniac and organic nitrogen, of gradual solubility and progressive nitrification that comprises the following steps:
• mix urea and a silicate in a reactor-mixer, add ammonium sulfate and later on add a source of nitrate anion (NO₃⁻).
• keep the reaction for an appropriate time, at room temperature and with an efficient aspiration system in order to control the temperature.
• add a source of organic nitrogen and mix.

14. Preparation method for a nitrogenated fertilizer containing ureic, nitric, ammoniac and organic nitrogen, of gradual solubility and progressive nitrification according to claim 13 in which the reactor-mixer is of LODIGE type.

15. Preparation method for a nitrogenated fertilizer containing ureic, nitric, ammoniac and organic nitrogen, of gradual solubility and progressive nitrification according to claim 13 in which the reactor-mixer is a spade or a spiral mixer.

16. Preparation method for a nitrogenated fertilizer containing ureic, nitric, ammoniac and organic nitrogen, of gradual solubility and progressive nitrification according to claim 13 in which the cited silicate is sepiolite.

17. Preparation method for a nitrogenated fertilizer containing ureic, nitric, ammoniac and organic nitrogen, of gradual solubility and progressive nitrification according to claim 13 in which the cited silicate is atapulgite.

18. Preparation method for a nitrogenated fertilizer containing ureic, nitric, ammoniac and organic nitrogen, of gradual solubility and progressive nitrification according to claim 13 in which the cited silicate is zeolite.

19. Preparation method for a nitrogenated fertilizer containing ureic, nitric, ammoniac and organic nitrogen, of gradual solubility and progressive nitrification according to claim 13 in which the cited silicate is talc.

20. Preparation method for a nitrogenated fertilizer containing ureic, nitric, ammoniac and organic nitrogen, of gradual solubility and progressive nitrification according to claim 13 in which the cited silicate is kaolin.

21. Preparation method for a nitrogenated fertilizer containing ureic, nitric, ammoniac and organic nitrogen, of gradual solubility and progressive nitrification according to claim 13 in which the cited source of nitrate anion (NO₃⁻) is 60% nitric acid.

22. Preparation method for a nitrogenated fertilizer containing ureic, nitric, ammoniac and organic nitrogen, of gradual solubility and progressive nitrification according to claim 13 in which the cited source of nitrate anion (NO₃⁻) is sodium nitrate.

23. Preparation method for a nitrogenated fertilizer containing ureic, nitric, ammoniac and organic nitrogen, of gradual solubility and progressive nitrification according to claim 13 in which the cited source of nitrate anion (NO₃⁻) is potassium nitrate.

24. Preparation method for a nitrogenated fertilizer containing ureic, nitric, ammoniac and organic nitrogen, of gradual solubility and progressive nitrification according to claim 13 in which the cited source of nitrate anion (NO₃⁻) is urea nitrate.

25. Preparation method for a nitrogenated fertilizer containing ureic, nitric, ammoniac and organic nitrogen, of gradual solubility and progressive nitrification according to claim 13 in which the cited source of organic nitrogen is vegetal flours.

26. Preparation method for a nitrogenated fertilizer containing ureic, nitric, ammoniac and organic nitrogen, of gradual solubility and progressive nitrification according to claim 13 in which the cited source of organic nitrogen is animal flours.

27. Preparation method for a nitrogenated fertilizer containing ureic, nitric, ammoniac and organic nitrogen, of gradual solubility and progressive nitrification according to claim 13 in which the components of the mixture are added in solid form.

28. Preparation method for a nitrogenated fertilizer containing ureic, nitric, ammoniac and organic nitrogen, of gradual solubility and progressive nitrification according to claim 13 in which the components of the mixture are added in suspension or in liquid solution.

29. Preparation method for a nitrogenated fertilizer containing ureic, nitric, ammoniac and organic nitrogen, of gradual solubility and progressive nitrification according to claim 28 in which the cited liquid is water.

30. Preparation method for a nitrogenated fertilizer containing ureic, nitric, ammoniac and organic nitrogen, of gradual solubility and progressive nitrification according to claim 28 in which the cited liquid is 0,1 M sulfuric acid.

31. Preparation method for a nitrogenated fertilizer containing ureic, nitric, ammoniac and organic nitrogen, of gradual solubility and progressive nitrification according to claim 28 in which the cited liquid is methanol.

32. Preparation method for a nitrogenated fertilizer containing ureic, nitric, ammoniac and organic nitrogen, of gradual solubility and progressive nitrification according to claim 28 in which the cited liquid is ethanol.

33. Preparation method for a nitrogenated fertilizer containing ureic, nitric, ammoniac and organic nitrogen, of gradual solubility and progressive nitrification according to claim 28 in which the cited liquid is carbon tetrachloride.

34. Preparation method for a nitrogenated fertilizer containing ureic, nitric, ammoniac and organic nitrogen, of gradual solubility and progressive nitrification according to claim 28 in which the cited liquid is 0,1 M sodium hydroxide.

35. Preparation method for a nitrogenated fertilizer containing ureic, nitric, ammoniac and organic nitrogen, of gradual solubility and progressive nitrification according to claim 13 in which the proportion of the components of the mixture is as follows:
| | |
|---|---|
| nitrate anion (NO₃⁻) source | 30% |
| urea | 30% |
| silicate | 10% |
| sulfate | 15% |
| organic nitrogen source | 15% |
